# EUROPÄISCHE PATENTSCHRIFT

(11) **EP 1 432 102 B1**
(45) Veröffentlichungstag und Bekanntmachung des Hinweises auf die Patenterteilung: **30.05.2007**
(21) Anmeldenummer: 03027463.3
(22) Anmeldetag: 01.12.2003
(51) Int. Cl.: H02K 9/20

(54) **Elektrische Maschine mit Heatpipes**
Electric machine with heat pipes
Machine électrique à canal de refroidissement

(30) Priorität: 16.12.2002 DE 10258778
(43) Veröffentlichungstag der Anmeldung: 23.06.2004
(73) Patentinhaber: SIEMENS AKTIENGESELLSCHAFT, 80333 München (DE)
(72) Erfinder: Potoradi, Detlef, Dr., 97616 Bad Neustadt/Saale (Mühlbach) (DE); Vollmer, Rolf, 36129 Gersfeld (DE)

(56) Entgegenhaltungen:
- EP-A- 0 079 985
- JP-A- 60 118 039
- US-A- 3 801 843
- US-A- 5 140 204
- US-A- 6 105 662
- PATENT ABSTRACTS OF JAPAN Bd. 013, Nr. 350 (E-800), 7. August 1989 (1989-08-07) & JP 01 110033 A (TOKYO ELECTRIC POWER CO INC:THE; others: 01), 26. April 1989 (1989-04-26)
- PATENT ABSTRACTS OF JAPAN Bd. 014, Nr. 259 (E-0937), 5. Juni 1990 (1990-06-05) & JP 02 079747 A (TOKYO ELECTRIC POWER CO INC:THE; others: 01), 20. März 1990 (1990-03-20)
- PATENT ABSTRACTS OF JAPAN Bd. 008, Nr. 239 (E-276), 2. November 1984 (1984-11-02) & JP 59 117456 A (SHINKO DENKI KK), 6. Juli 1984 (1984-07-06)
- PATENT ABSTRACTS OF JAPAN Bd. 012, Nr. 146 (E-605), 6. Mai 1988 (1988-05-06) & JP 62 262633 A (FUJI ELECTRIC CO LTD), 14. November 1987 (1987-11-14)

## Beschreibung

Die Erfindung bezieht sich auf allgemeine elektrische Maschinen mit Wärmequellen.

Im Betrieb elektrischer Maschinen entsteht im Stator und im Rotor Wärme, die nach außen abgeführt werden muss, um einen ordnungsgemäßen Betrieb aufrecht zu erhalten. Dies erfolgt durch die Wärmeleitung über das Joch des Stators oder durch die bekannten Luft- und Flüssigkeitsprinzipien, was aber insbesondere bei Hochleistungsmotoren oder bei kompakter Bauweise nicht ausreichend ist. Deshalb werden Flüssigkeitskühlung eingesetzt, die jedoch einen relativ hohen apparativen Aufwand mit Zu- und Ableitungen erfordern. Nachteilig ist außerdem, dass Zu- und Ableitungen nur an der der Funktionsseite (Wicklungen etc.) abgewandten Seite angebracht werden können.

Die JP 60 118 039 offenbart eine elektrische Maschine mit den Merkmalen des Obergriffs des Anspruchs 1.

Der Erfindung liegt demnach die Aufgabe zugrunde, eine effiziente und einfache Kühlung der Wärmequellen einer elektrischen Maschine zu schaffen.

Die Lösung der gestellten Aufgabe gelingt durch eine Maschine nach Anspr. 1, Heatpipes sind kommerziell erhältliche, in sich geschlossene Rohrelemente, die an der Innenwandung eine Kapillarschicht aufweisen und ein Transportmittel enthalten. Wird im Betrieb ein Ende (Warmzone) des Heatpipes erwärmt, geht das Transportmittel in die Dampfphase über und wird durch den mittleren Bereich (Transportzone) des Heatpipes zum anderen Ende (Kaltzone) transportiert. Dort kondensiert der Dampf wieder zur Flüssigkeit. Die kondensierte Flüssigkeit wird über Kapillarkräfte in der Kapillarschicht (z.B. einem Docht) wieder zurück in die Warmzone transportiert. Standardmaße für die Außendurchmesser sind etwa 0,1 bis 16 mm, für die Länge etwa 50 bis 300 mm.

Die Heatpipes werden vorteilhafterweise in oder nahe der Wärmequellen der elektrischen Maschine positioniert. Dabei sind Wärmequellen u.a. die magnetfeldführenden Teile wie z.B. Blechpakete von Stator und Rotor, stromführende Teile, wie z.B. die Wicklungssysteme von Stator und Rotor und die für den Betrieb einer elektrischen Maschine notwendigen Teile , wie z.B. Lager. Auf diese Weise kann die Wärme bereits an dem Ort an dem sie entsteht, abtransportiert werden ohne dass sich zusätzliche sekundäre Teile aufheizen. Vorteilhafterweise sind die Kaltzonen der Heatpipes mit Kühlmassen oder Kühlern verbunden, die die Wärme an die Umgebung abgeben. Dies können insbesondere Fächerkühler oder separat gekühlte Elemente sein.

Ein weiterer Vorteil der Kühlung durch Heatpipes besteht darin, dass eine verhältnismäßig gute Entwärmung der elektrischen Maschine bei gleichzeitig ungestörten magnetischen Eigenschaften vorliegt.

Figuren 2, 4 und 5 zeigen vorteilhafte Ausgestaltungen der Erfindung. Die weiteren Figuren zeigen Beispiele, die keine Ausführungsformen der Erfindung sind, aber für das Verständnis der Erfindung nützlich sind. Darin zeigen:
- FIG 1 bis 8 und FIG 11: Anordnungen von Heatpipes in einer elektrischen Maschine,
- FIG 12: in tabellarischer Form die Zusammenstellung der jeweiligen Einbauorte für Heatpipes und Kühler,
- FIG 13: Heatpipe mit Knickstellen.

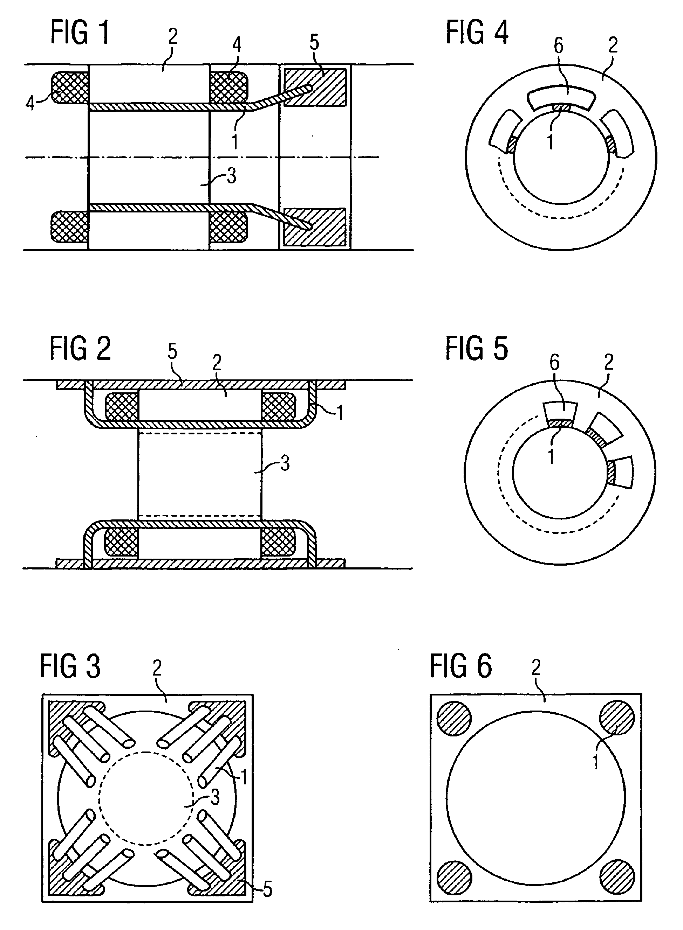

FIG 1 zeigt eine schematisch dargestellte elektrische Maschine mit einem Stator 2 und einem Rotor 3, wobei an den Stirnseiten des Blechpakets des Stators 2 Wickelköpfe 4 vorhanden sind. In den Nuten verlaufen axial Heatpipes 1, deren Warmzonen axial nach außen geführt werden, und dort in einen Kühler 5 münden, der als Luft- oder Wasserkühler ausführbar ist. Der Kühler 5 ist dabei axial separat von der Maschine angeordnet oder befindet sich im Lagerschild der elektrischen Maschine. Die Heatpipe 1 weist dabei in axialer Richtung unmittelbar nach dem Wickelkopf 4 einen Knick auf, der nach au-ßen weist. Damit wird die Effizienz der Heatpipe 1 erhöht, da diese nicht gegen die Schwerkraft arbeiten soll.

FIG 2 zeigt das Ausführungsbeispiel mit einer Anordnung der Heatpipe 1 axial durch das Statorblechpaket, wobei sowohl auf der einen als auch auf der anderen Stirnseite des Blechpakets des Stators 2 die Heatpipes 1 nach dem Wickelkopf nach außen zu einem Luft- oder Wasserkühler am Umfang der elektrischen Maschine geführt sind. Die Biegung unmittelbar nach den Wickelköpfen 4 weist dabei ein wesentlich geringeren Radius auf als in FIG 1. Die Effizienz der elektrischen Maschine wird dabei gesteigert, da die beiden stirnseitigen Wickelköpfe gekühlt werden.

FIG 3 zeigt in einem Querschnitt eine radiale Anordnung der Heatpipes 1 im Stator 2, die ihre Kaltzonen in den Ecken des Stators 2 aufweisen. Dort sind dann auch die Kühler 5 platziert.

FIG 4 bzw. FIG 5 zeigen die Anordnungen der Heatpipes 1 in der Nut 6. Dabei können die Heatpipes 1 sowohl im Nutschlitz einer halb geschlossenen Nut 6 angeordnet sein als zumindest ein Teil eines Nutverschlussteils sein. Ebenso ist es möglich insbesondere die Heatpipes 1 in den Wicklungen innerhalb der Hauptisolierung zu platzieren.

FIG 6 zeigt eine Anordnung eines rechteckförmig ausgeführten Stators 2, der insbesondere in den Ecken des Stators 2 axial verlaufene Heatpipes 1 aufweist.

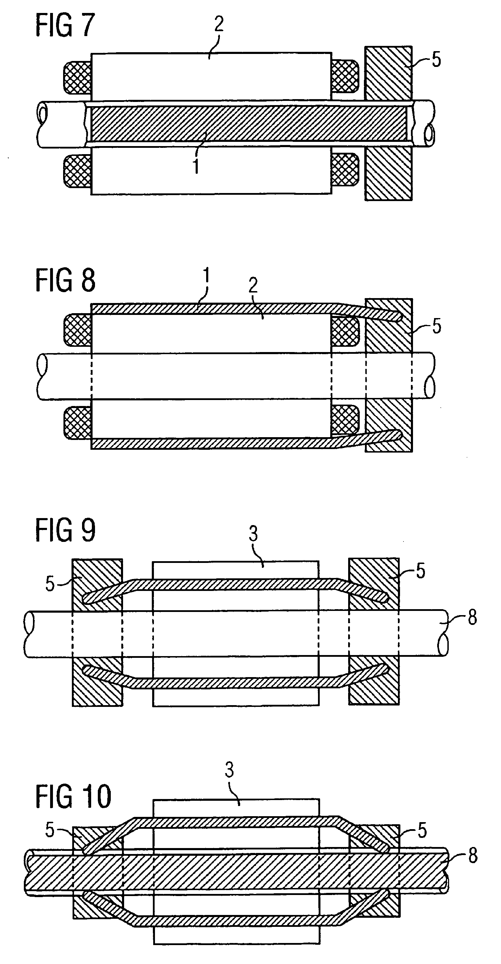

FIG 7 zeigt einen schematisch dargestellten Außenläufermotor, bei dem der Stator 2 auf einer Achse positioniert ist. Die Heatpipe 1 befindet sich in der Achse des Stators 2 und transportiert die dort anfallende Verlustwärme axial in Richtung eines an der Stirnseite des Blechpaketes befindlichen Kühlers.

Die Heatpipes 1 bei einem Außenläufer können ebenso wie in FIG 8 dargestellt sich in den Nuten befinden, die zum Luftspalt des Außenläufermotors weisen. Dabei sind die Heatpipes 1 ebenso mit ihren Kaltzonen an Kühler 5 an der Stirnseite angeschlossen.

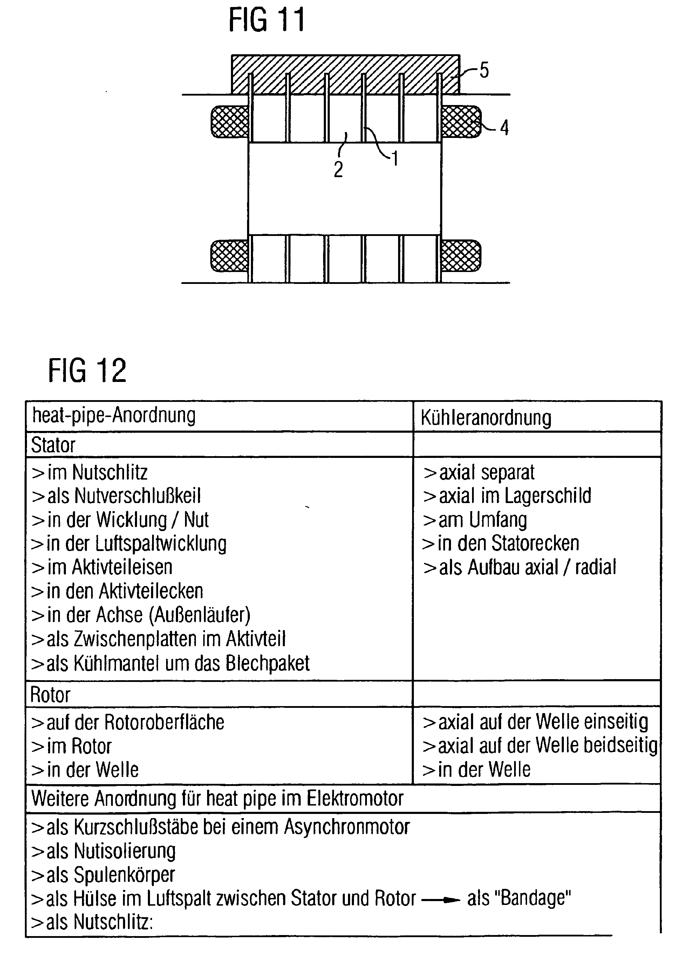

FIG 11 zeigt in einer weiteren Ausführungsform, dass das Blechpaket des Stators 2 durch Zwischenplatten, die als Heatpipes 1 ausgeführt sind aufgebaut ist. Damit tritt eine Entwärmung des Stators in radialer Richtung auf, so dass sich am radial äußeren Umfang des Stators 2 Kühler befinden. Die Kühler 5 können dabei sowohl Luft- als auch Flüssigkeitskühler sein.

FIG 9 zeigt die Kühlung von Rotoren 3 von Elektromotoren mit Heatpipe 1. Dabei sind die Heatpipes 1 im Blechpaket des Rotors 3 eingesetzt. Sie verlaufen in axialer Richtung und weisen an ihren jeweiligen Stirnseiten Kühler 5 auf, die mit der Welle mit rotieren, somit zur Kühlung der Kaltzone der HeatPipe 1 beitragen.

FIG 10 zeigt in einer ähnlichen Ausführungsform die Anordnung der Heatpipe 1 im Rotor 3, wobei die Kühler 5 in der Welle 8 des Rotors 3 angeordnet sind.

Im folgenden Absatz sind Beispiele, die nicht zur Erfindung gehören, beschrieben:

Die Heatpipes 1 können auch als Kurzschlussstäbe bei einem Asynchronmotor prinzipiell eingesetzt werden. Ebenso sind diese als Nutisolierung in einer Nut 6 sowohl von Rotor und Stator einsetzbar. Ebenso sind die Heatpipes als Spulenkörper ausbildbar, um die eine Wicklung gelegt wird. In einer weiteren Ausführungsform ist die Heatpipe als Hülse im Luftspalt zwischen Stator und Rotor einsetzbar, dort insbesondere als Bandage zur Fixierung von Permanentmagneten.

Durch verschiedene Querschnittsformen der Heatpipes 1 lassen sich die Anwendungen optimieren, d.h. so sind flächige Heatpipes 1 in ihrer Kühleffizienz weniger leistungsfähig als zylindrisch ausgeführte Heatpipes, die Kühleffizienz übertrifft aber trotzdem die herkömmlichen Kühlmedien. Somit können derartige Heatpipes 1 auch an Oberflächen von z.B. Rotoren 3 angebracht werden.

Diese Heatpipes 1 können nach Vorgaben (Radien, Durchmesser etc.) im Werk gefertigt und einem entsprechenden Maschinentyp zugeordnet und dort eingebaut werden.

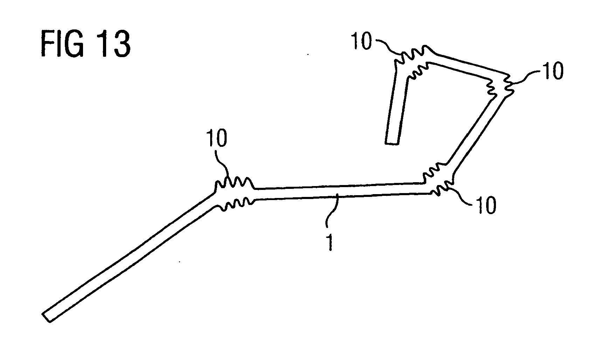

Flexibel heißt dass an sich gerade ausgeführte Heatpipes 1 durch Biegen an beliebiger oder vorgegebener Stelle dieser Heatpipes 1 den Formen der elektrischen Maschine angepasst werden können. Das Biegen an vorgegebenen Stellen kann insbesondere dann erreicht werden, wenn diese Biegestellen faltenbalgähnlich wie in FIG 13 dargestellt ausgeführt sind.

## Patentansprüche

1. Elektrische Maschine mit einem Stator (2), die zu kühlende Warmequellen aufweist, insbesondere Wicklungen, Blechpakete, Wickelköpfe, wobei eine Kühlung durch Heatpipes (1) erfolgt, wobei die Heatpipes (1) jeweils eine Warmzone, eine Transportzone und eine Kaltzone aufweisen und sich die Warmzonen bei den Warmequellen befinden, wobei die Heatpipes (1), die durch das Statorblechpaket axial verlaufen, eine Biegung zu einem Luft- oder Wasserkühler am Umfang der elektrischen Maschine aufweisen, **dadurch gekennzeichnet, dass** die elektrische Maschine einen Rotor (3) aufweist, dass die Heatpipes (1) zumindest abschnittsweise flexibel ausgebildet sind, dass die Biegung unmittelbar nach den stirnseitigen Wickelköpfen erfolgt, um diese Wickelköpfe ebenfalls zu küllen, wobei die Biegung in einem der flexiblen Abschnitt erfolgt.

2. Elektrische Maschine nach Anspruch 1,
**dadurch gekennzeichnet, dass**
der küller (5) Teil der elektrischen Maschine ist oder separat anordenbar ist.

3. Electrische Maschine nach Anspruch 1,
**dadurch gekennzeichnet, dass**
die Heatpipes (1) sowohl im Nutschlitz einer halb geschlossenen Nut (6) angeordnet sind oder zumindest einen Teil eines Nutverschlussteils bilden.

## Claims

1. An electric machine comprising a stator (2) with heat-generating sources to be cooled, in particular windings, stacks of laminations, winding end portions,
with the cooling being achieved by means of heat pipes (1), with the heat pipes (1) each having an evaporation zone, a transport zone and a condenser zone, and with the evaporation zones being positioned adjacent to the heat-generating sources,
with the heat pipes (1) arranged axially through the stack of laminations of the stator having a bend towards an air cooler or a water cooler which is positioned at the circumference of the electric machine,
**characterised in that**
the electric machine has a rotor (3)
the heat pipes (1) are constructed to be flexible at least along a section,
the bend is located immediately behind the winding end portions at the end faces so as to also cool these winding end portions, with the bend being located in one of the flexible sections.

2. The electric machine as claimed in claim 1,
**characterised in that**
the cooler (5) is part of the electric machine or can be separate from the electric machine.

3. The electric machine as claimed in claim 1,
**characterised in that**
the heat pipes (1) are arranged in the slot opening of a half-closed slot (6) or form at least part of a slot seal.

## Revendications

1. Machine électrique, ayant un stator (2), qui a des sources de chaleur à refroidir, en particulier des enroulements, des empilages de tôles, des têtes de bobine,
un refroidissement étant effectué par des caloducs (1), les caloducs (1) ayant respectivement une zone chaude, une zone de transport et une zone froide, et les zones chaudes se trouvant au niveau des sources de chaleur,
les caloducs (1) qui sont disposés axialement à travers l'empilage de tôles de stator présentant une courbure dirigée vers un refroidisseur à air ou à eau sur la circonférence de la machine électrique,
**caractérisée en ce que**
la machine électrique a un rotor (3),
**en ce que** les caloducs (1) sont, au moins par tronçons, constitués de façon flexible,
**en ce que** la courbure s'effectue immédiatement après les têtes de bobine côté frontal afin de refroidir également ces têtes de bobine,
la courbure s'effectuant dans un des tronçons flexibles.

2. Machine électrique selon la revendication 1,
**caractérisée en ce que**
le refroidisseur (5) fait partie de la machine électrique ou peut être disposé séparément.

3. Machine électrique selon la revendication 1,
**caractérisée en ce que**
les caloducs (1) sont disposés aussi bien dans la fente d'encoche d'une encoche (6) à moitié fermée ou forment au moins une partie d'une partie de fermeture d'encoche.
